(19) Europäisches Patentamt

European Patent Office

Office européen des brevets

(11) Numéro de publication: **0 468 120 A1**

## (12) DEMANDE DE BREVET EUROPEEN

(21) Numéro de dépôt: **90402143.3**

(22) Date de dépôt: **25.07.90**

(51) Int. Cl.⁵: **F16F 1/36**, F16F 3/08

(43) Date de publication de la demande:
**29.01.92 Bulletin 92/05**

(84) Etats contractants désignés:
**AT BE CH DE DK ES FR GB GR IT LI LU NL SE**

(71) Demandeur: **FABERT S.A.**
**42 rue Fabert**
**F-75007 Paris(FR)**

(72) Inventeur: **Kleinfelden, Jean**
**28, Avenue de Suffren**
**F-75015 Paris(FR)**

(74) Mandataire: **Jacobson, Claude et al**
**Cabinet Lavoix 2, Place d'Estienne d'Orves**
**F-75441 Paris Cedex 09(FR)**

(54) **Structure composite pour l'amortissement de vibrations.**

(57) Structure composite pour l'amortissement de vibrations, du type comprenant des plaques superposées (1, 2, 3) en des matériaux élastiques présentant des duretés Shore différentes, ces plaques étant en contact mutuel par des faces comportant des cannelures rectilignes (4, 5, 6) de profil complémentaire, les parties en saillie des cannelures de chaque face étant emboîtées avec des plans de joint libres dans les parties en creux correspondantes de l'autre face, cette structure étant caractérisée en ce qu'elle comporte trois plaques ainsi imbriquées, à savoir deux plaques externes (1, 2) en un matériau dur ayant une dureté Shore d'au moins 45, et une plaque intercalaire en un matériau souple et résilient, ayant une dureté Shore d'au plus 30.

EP 0 468 120 A1

La présente invention concerne une structure composite pour l'amortissement de vibrations émises ou reçues par un ensemble reposant sur cette structure.

Dans son brevet français N° 2.348.402, M. KLEINFELDEN a décrit des blocs amortisseurs de vibrations constitués d'au moins deux panneaux superposés en un matériau élastique présentant une dureté Shore différente. Ces panneaux comportent respectivement, sur leur face externe, des plots déformables dont la section à l'état de repos varie en diminuant depuis leur base jusqu'à leur sommet. Ces plots sont, par exemple, disposés en quinconce sur chaque face et, de préférence, un plot d'une face d'un panneau correspond à un évidement de la face correspondant de l'autre panneau.

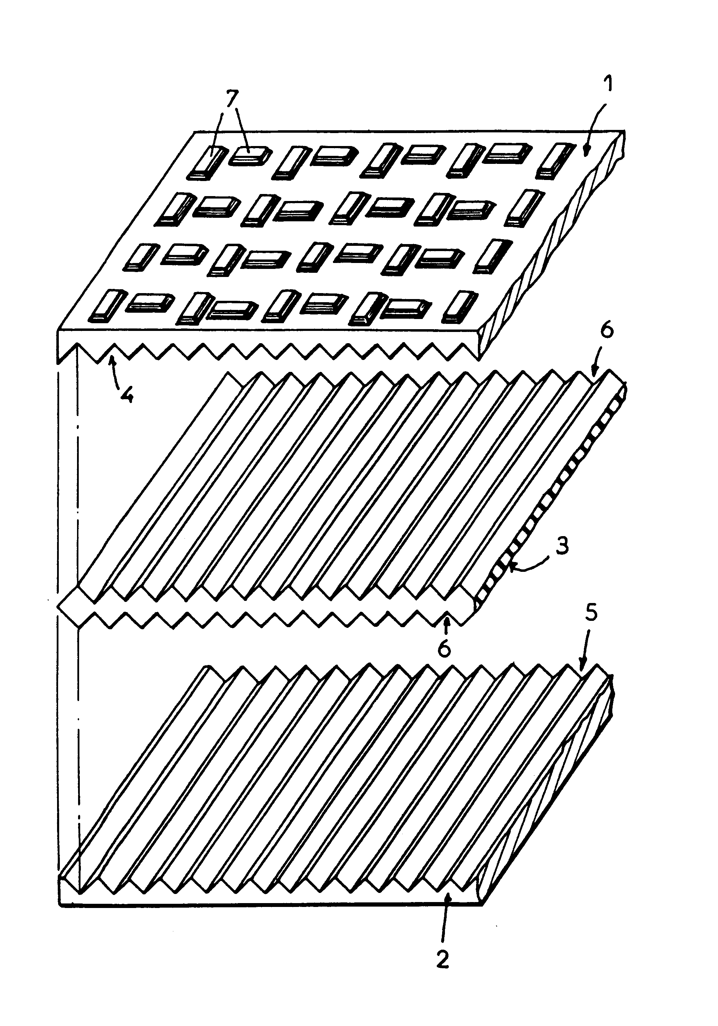

Dans une forme de réalisation représentée sur la figure 3 du brevet précité, les faces en contact des deux éléments constitutifs de ces blocs amortisseurs comportent des cannelures longitudinales ayant, en coupe transversale, la forme d'une ligne sinusoïdale ou en créneaux ou encore en dents de scie. Les parties en saillie de l'une des faces sont imbriquées dans les parties en creux de l'autre face et, du fait de leur dureté différente, elles préviennent la propagation des ondes transversalement à la direction des cannelures.

Ayant constaté qu'avec de tels bloc amortisseurs de vibrations, les ondes vibratoires pouvaient se propager dans le sens longitudinal en suivant les cannelures des plaques, M. KLEINFELDEN a ensuite proposé, dans le brevet européen N° 0 021 958, dans lequel il était mentionné comme unique inventeur, de réaliser une structure composite antivibratoire constituée d'au moins deux plaques superposées en des matériaux élastiques présentant respectivement une dureté Shore différente, ces plaques comportant sur leur face externe des plots déformables, tandis que leurs faces en contact mutuel comportent des cannelures rectilignes de profil complémentaire, les parties en saillie des cannelures de chaque face étant emboîtées dans les parties en creux correspondantes de l'autre face, cette structure antivibratoire étant caractérisée en ce que les parties en saillie desdites cannelures sont fendues, sensiblement depuis leur base, à intervalles de préférence réguliers, par des découpes transversales.

Ces découpes transversales, qui interrompent périodiquement les parois latérales desdites cannelures, s'opposent ainsi de façon particulièrement simple à la propagation longitudinale des ondes vibratoires dans la direction de ces cannelures.

Ce perfectionnement s'appliquait aussi bien aux cannelures dont le profil, en coupe transversale, est en dents de scie ou sinusoïdal, qu'à celles dont le profil transversal a la forme de créneaux.

En pour suivant ses travaux sur de telles structures,M. KLEINFELDEN a constaté que les systèmes de la technique antérieure présentent un taux insuffisant d'absorption des vibrations à basses fréquences, inférieurs à 200Hz et, plus particulièrement, des fréquences inférieures à 100Hz.

Par ailleurs, avec les systèmes connus, notamment ceux qui comportent à leur surface externe des plots tronconiques sur lesquels reposent des machines émettant ou recevant des vibrations que l'on désire amortir, on constate que les structures risquent de provoquer un mouvement d'oscillation à basse fréquence de ces machines, en particulier si celles-ci possèdent une fréquence propre d'oscillation qui risque d'entrer en résonance avec l'oscillation des plots.

La présente invention vise à remédier à ces inconvénients de la technique connue en proposant une structure antivibrations qui soit apte à amortir des vibrations d'une fréquence inférieure à 200Hz et même à 100Hz.

L'invention vise également à proposer une structure de ce type qui ne puisse osciller de façon appréciable sous l'effet des vibrations qui lui sont transmises.

L'invention a encore pour but de proposer une telle structure qui présente conjointement une bonne élasticité, favorable à l'amortissement des vibrations, et une excellente résistance mécanique, malgré l'effet néfaste de cette dernière caractéristique sur l'amortissement.

Enfin, l'invention a pour but de proposer une structure de ce type qui puisse être fabriquée aisément, moyennant un coût réduit.

A cet effet, la présente invention a pour objet une structure composite pour l'amortissement de vibrations, du type comprenant des plaques superposées en des matériaux élastiques présentant des duretés Shore différentes, ces plaques étant en contact mutuel par des faces comportant des cannelures rectilignes de profil complémentaire, les parties en saillie des cannelures de chaque face étant emboîtées avec des plans de joint libres dans les parties en creux correspondantes de l'autre face, cette structure étant caractérisée en ce qu'elle comporte trois plaques ainsi imbriquées, à savoir deux plaques externes en un matériau dur ayant une dureté Shore d'au moins 45, et une plaque intercalaire en un matériau souple et résilient, ayant une dureté Shore d'au plus 30.

Dans une telle structure, l'effet d'amortissement est naturellement dévolu à la plaque centrale résiliente et aux plans de joints libres entre matériaux de dureté différente, tandis que les couches externes apportent la résistance mécanique désirée pour la structure.

Les duretés Shore des plaques externes pourront être identiques ou différentes. Elles seront généralement de l'ordre de 50, afin que les plaques puissent résister à une charge relativement importante. La surface d'appui de ces plaques sera naturellement choisie en fonction de l'importance de la masse de la charge à supporter.

La dureté Shore de la plaque intercalaire sera habituellement de l'ordre de 25.

L'imbrication des plaques par des profils complémentaires évitera qu'elles risquent de se séparer en cours d'utilisation.

L'épaisseur de la couche intercalaire dépendra de la fréquence des vibrations que l'on souhaite amortir. En effet, sous l'effet des vibrations, il est connu qu'une couche en un matériau souple et résilient peut varier très sensiblement d'épaisseur, la rétraction variant avec l'épaisseur de la plaque, comme indiqué dans le Tableau suivant.

TABLEAU

| Fréquence (Hz) | Contraction (mm) |
|---|---|
| 5 | 9,9 |
| 6 | 6,9 |
| 7 | 5,1 |
| 8 | 3,9 |
| 9 | 3,1 |
| 10 | 2,5 |

Plus la fréquence est basse et plus la couche intercalaire doit pouvoir se rétracter. Dans la pratique, il faudra donc tenir compte de ce facteur, en choisissant une épaisseur de couche intercalaire adaptée à la fréquence des vibrations à amortir. Pour les basses fréquences usuelles, cette épaisseur sera généralement comprise entre 10 et 15 millimètres.

Afin de supprimer toute oscillation des parties de la surface externe servant d'appui à des machines dont on désire amortir les vibrations, ou que l'on souhaite protéger des vibrations extérieures, ces parties auront avantageusement la forme de pyramides tronquées à section rectangulaire, disposées suivant des rangées dirigées suivant les cannelures des plaques et dans lesquelles la grande longueur de la base de ces pyramides est alternativement parallèle ou perpendiculaire à ces cannelures.

Tout matériau présentant les duretés Shore appropriées pourra être utilisé pour réaliser les plaques de la structure conforme à l'invention, par exemple un polyuréthane ou un caoutchouc à base de chloroprène tel que le Néoprène (marque déposée).

Avantageusement, un additif apte à réduire l'échauffement sera incorporé dans le matériau constitutif de la plaque intercalaire. En effet, la vibration de cette plaque intercalaire provoque un échauffement de celle-ci qui peut être relativement important. Pour éviter les problèmes posés par cet échauffement, on a **établi** qu'on peut judicieusement incorporer dans le matériau de cette plaque des lamelles de mica micronisé, qui favorisent le transfert des calories vers les bords de la plaque, où elles sont évacuées par contact avec l'atmosphère.

Le dessin annexé, qui n'a pas de caractère limitatif, illustre une forme de mise en oeuvre de l'invention. La figure unique de ce dessin est une vue en perspective éclatée, avec arrachement, de la structure conforme à l'invention.

Comme on le voit sur la figure, cette structure comprend, deux plaques externes, à savoir, respectivement, une plaque supérieure 1, sur laquelle prendra appui la structure à protéger des vibrations ou dont on désire amortir les vibrations, et une plaque inférieure 2, destinée à prendre appui sur le sol ou sur un support. Entre ces deux plaques, est interposée une plaque intercalaire 3. Les plaques 1, 2 et 3 présentent, sur leurs faces en contact mutuel, des profils crénelés complémentaires 4, 5 et 6, définis par des cannelures rectilignes parallèles, qui permettent de les imbriquer étroitement les unes dans les autres, en laissant libres leurs plans de joint. Dans le cas présent, les cannelures ont une section transversale triangulaire, mais on pourrait naturellement adopter un autre profil crénelé : trapézoïdal, rectangulaire, sinusoïdal, ondulé, ou autre.

Les plaques 1, 2 et 3 sont par exemple en polyuréthane ou en un caoutchouc à base de chloroprène.

Les plaques externes 1 et 2 sont relativement dures, de manière à présenter une résistance mécanique satisfaisante ; leur dureté Shore sera de l'ordre de 50. En revanche, la plaque intercalaire 3 sera souple et résiliente et aura une dureté Shore de l'ordre de 25. Cette plaque intercalaire se contractera sous l'effet des vibrations de basse fréquence de façon relativement importante, comme indiqué dans le Tableau ci-dessus.

En outre, elle subira un échauffement appréciable et, de manière à pouvoir évacuer latéralement les calories vers l'atmosphère, des particules lamellaires de mica seront avantageusement incorporées dans le matériau constitutif de cette plaque, comme expliqué ci-dessus.

La surface inférieure ou surface externe de la plaque inférieure 2 sera plane, mais, pour éviter tout ripage du matériel supporté par la plaque supérieure 1 et toute oscillation des parties de celle-ci qui serviront de point d'appui, sa surface supérieure comportera des parties en saillie 7, en forme de pyramide tronquée à base rectangulaire, dont la face supérieure formera surface d'appui pour le matériel supporté. Comme représenté sur le dessin, les parties en saillie 7 sont disposées suivant des rangées parallèles aux cannelures de la face inférieure de la plaque 1, alternativement dans le prolongement les unes des autres, avec les grands côtés de leur base disposés parallèlement aux cannelures, et en parallèle, avec les grands côtés de leur base disposés perpendiculairement à ces cannelures. En variante, la surface externe de la plaque inférieure 2 peut comporter les parties 7 et celle de la plaque supérieure 1 être lisse, ou bien les deux plaques 1, 2 peuvent comporter des parties 7 en saillie.

On notera que les plaques constitutives de cette structure antivibratoire peuvent être aisément réalisées par moulage moyennant un coût minime.

L'invention apporte donc un moyen simple et peu coûteux pour la réalisation d'une structure d'amortissement des vibrations qui est efficace pour des vibrations de basse fréquence et qui évite tout déplacement néfaste des machines qu'elle supporte.

**Revendications**

1. Structure composite pour l'amortissement de vibrations, du type comprenant des plaques superposées (1, 2, 3) en des matériaux élastiques présentant des duretés Shore différentes, ces plaques étant en contact mutuel par des faces comportant des cannelures rectilignes (4, 5, 6) de profil complémentaire, les parties en saillie des cannelures de chaque face étant emboîtées avec des plans de joint libres dans les parties en creux correspondantes de l'autre face, cette structure étant caractérisée en ce qu'elle comporte trois plaques ainsi imbriquées, à savoir deux plaques externes (1, 2) en un matériau dur ayant une dureté Shore d'au moins 45, et une plaque intercalaire en un matériau souple et résilient, ayant une dureté Shore d'au plus 30.

2. Structure selon la revendication 1, caractérisée en ce que les plaques externes (1, 2) ont une dureté Shore de l'ordre de 50, tandis que la plaque intercalaire (3) a une dureté Shore de l'ordre de 25.

3. Structure selon l'une des revendications 1 et 2, caractérisée en ce que les plaques externes (1, 2) et la plaque intercalaire (3) sont en polyuréthane ou en caoutchouc à base de chloroprène.

4. Structure selon l'une des revendications 1 à 3, caractérisée en ce que dans le matériau de la plaque intercalaire est incorporé un matériau apte à limiter l'échauffement de cette plaque sous l'effet des vibrations.

5. Structure selon la revendication 4, caractérisée en ce que le matériau propre à limiter l'échauffement de la plaque intercalaire contient des lamelles de mica.

6. Structure selon l'une des revendications 1 à 5, caractérisée en ce que la face extérieure d'une plaque externe (1, 2) au moins comprend des parties en relief (7) en forme de pyramides tronquées à base rectangulaire.

7. Structure selon la revendication 6, caractérisée en ce que les parties en relief (7) en forme de pyramide tronquée à base rectangulaire sont disposées suivant des rangées parallèles aux cannelures de la structure, les bases des pyramides étant disposées alternativement dans le prolongement les unes des autres, avec leurs grands côtés parallèles aux cannelures, et parallèlement les unes aux autres, avec leurs grands côtés perpendiculaires aux cannelures.

8. Plaque en matériau élastique pour structure composite pour l'amortissement de vibrations, notamment suivant l'une quelconque des revendications 1 à 7, caractérisée en ce qu'elle comporte des cannelures (4) sur sa face intérieure et, sur sa face extérieure, des parties en relief (7) en forme de pyramide tronquée à base rectangulaire disposées suivant des rangées parallèles aux cannelures, les bases des pyramides étant disposées alternativement dans le prolongement les unes des autres, avec leurs grands côtés parallèles aux cannelures, et parallèlement les unes aux autres, avec leurs grands côtés perpendiculaires aux cannelures.

**Office européen des brevets**

# RAPPORT DE RECHERCHE EUROPEENNE

Numéro de la demande

**EP 90 40 2143**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 642 490 (KLEINFELDEN J.)<br>* le document en entier * | 1-8 | F 16 F 1/36<br>F 16 F 3/08 |
| Y,D,A | FR-A-2 348 402 (KLEINFELDEN J.)<br>* le document en entier * | 1,2,3,8 | |
| Y,A | DE-U-7 801 672 (DELTA MATERIALS RESEARCH LTD)<br>* revendications 1-6, 8, 9; figures 2-4 * * page 7, tableau 1 * | 1,2,3,6 | |
| A,D | EP-A-0 021 958 (K-PRIS S.A.)<br>* revendication ; figures 1, 2 * | 1,2,6-8 | |
| A | FR-A-2 140 325 (P.L. WATTELEZ)<br>* page 1, ligne 26 - page 2, ligne 31; figures 1, 2 * | 1,2 | |
| A | FR-A-2 392 807 (VERRE ET TECHNIQUE)<br>* page 3, ligne 29 - page 4, ligne 28; revendications 1-7; figures 1, 2 * | 1,2 | |
| A | GB-A-2 087 902 (HOHYU RUBBER CO. LTD)<br>* page 14, lignes 14 - 42; revendications 1, 11, 16; figure 41 * | 1,2 | **DOMAINES TECHNIQUES RECHERCHES (Int. Cl.5)** |
| A | CH-A-557 487 (R. SCHREPFER)<br>* colonne 2, lignes 17 - 54; figures 2, 3 * | 1,2,6 | F 16 F |

**Le présent rapport de recherche a été établi pour toutes les revendications**

| Lieu de la recherche | Date d'achèvement de la recherche | Examinateur |
|---|---|---|
| La Haye | 20 mars 91 | TSITSILONIS L. |